**Europäisches Patentamt**

**European Patent Office**

**Office européen des brevets**

(19)

(11) Veröffentlichungsnummer: **0 245 645**
**B1**

(12) ## EUROPÄISCHE PATENTSCHRIFT

(45) Veröffentlichungstag der Patentschrift:
**03.01.90**

(51) Int. Cl.⁴: **F16D 3/32**

(21) Anmeldenummer: **87105036.5**

(22) Anmeldetag: **04.04.87**

(54) Gelenkwelle mit zwei kardanischen Gelenken.

(30) Priorität: **14.05.86 DE 3616209**

(43) Veröffentlichungstag der Anmeldung:
**19.11.87 Patentblatt 87/47**

(45) Bekanntmachung des Hinweises auf die Patenterteilung:
**03.01.90 Patentblatt 90/1**

(84) Benannte Vertragsstaaten:
**DE FR GB IT**

(56) Entgegenhaltungen:
**BE-A- 512 502**
**DE-C- 552 646**
**DE-C- 664 786**
**FR-A- 1 156 470**
**GB-A- 338 667**
**GB-A- 414 923**
**LU-A- 67 601**
**US-A- 1 898 265**
**US-A- 2 133 176**
**US-A- 2 864 246**

(73) Patentinhaber: **Hartz, Helmut, Hedwigstrasse 24,**
**D-4690 Herne 2(DE)**

(72) Erfinder: **Hartz, Helmut, Hedwigstrasse 24,**
**D-4690 Herne 2(DE)**

(74) Vertreter: **Andrejewski, Walter et al, Patentanwälte**
**Andrejewski, Honke & Partner**
**Postfach 10 02 54 Theaterplatz 3, D-4300 Essen 1(DE)**

## Beschreibung

Die Erfindung betrifft eine Gelenkwelle mit den Merkmalen des Oberbegriffs des Patentanspruches 1 bzw. 3.

Bei einer solchen aus der DE-C 522 646 bekannten Ausführung sind für jedes kardanische Gelenk unabhängige Außenringe vorgesehen, die über ein Verbindungselement miteinander verbunden sind. Die Außenringe arbeiten mit Zwischenringen zusammen und die Innenteile eines jeden Gelenks sind mit den Anschlußelementen fest verbunden. Außerdem sind die Innenteile über eine Zentriergelenkausbildung miteinander gekuppelt, die sowohl Winkelbewegungen als auch axiale Bewegungen zuläßt. Eine axiale Bewegung bzw. Verschiebung der Anschlußelemente relativ zueinander ist aber nicht möglich. Ähnliches gilt auch für eine andere, aus der GB-A 338 667 bekannte Ausführung. Aus der US-A 2 864 246 ist es ferner bekannt, einen der Außenringe im Verbindungsteil axial verschiebbar zu führen.

Aufgabe der Erfindung ist es, eine gattungsgemäße Gelenkwelle so zu verbessern, daß auch bei kürzerer Bauweise eine freie konstruktive Gestaltung möglich ist und insbesondere eine axiale Verschiebung eingerichtet werden kann.

Diese Aufgabe wird gelöst mit den Merkmalen einerseits des Patentanspruches 1 und andererseits des unabhängigen Patentanspruches 3.

Die erreichten Vorteile sind darin zu sehen, daß die erfindungsgemäße Gelenkwelle wesentlich kürzer und kompakter baut sowie aus Bauteilen besteht, die die auftretenden Beanspruchungen ohne weiteres aufnehmen können. Erfindungsgemäß können im Innenraum der Innenringe bzw. im Innenraum eines der Innenringe Bauteile für die axiale Verschiebbarkeit untergebracht werden, ohne daß die Baulänge dadurch vergrößert wird.

Im folgenden wird die Erfindung anhand einer lediglich ein Ausführungsbeispiel darstellenden Zeichnung ausführlicher erläutert; es zeigen:

Fig. 1 perspektivisch eine erfindungsgemäßen Gelenkwelle mit angeschlossenen Wellen, teilweise aufgebrochen,

Fig. 2 einen Axialschnitt durch den Gegenstand der Fig. 1,

Fig. 3 einen Radialschnitt durch ein kardanisches Gelenk der Gelenkwelle,

Fig. 4 entsprechend der Fig. 2 eine andere von der Erfindung nicht betroffene Ausführungsform der erfindungsgemäßen Gelenkwelle, ausschnittsweise,

Fig. 5 entsprechend der Fig. 4 eine weitere Ausführungsform einer Gelenkwelle,

Fig. 6 entsprechend der Fig. 4 eine andere erfindungsgemäße Ausführungsform einer Gelenkwelle,

Fig. 7 mit den Teilfiguren a) bis i) schematisch mögliche Anordnungen des Verbindungselementes und der Anschlußelemente bei einer Gelenkwelle ohne Einrichtung zur axialen Verschiebung,

Fig. 8 mit den Teilfiguren a) bis i) schematisch mögliche Anordnungen des Verbindungselementes und der Anschlußelemente bei einer Gelenkwelle mit axialer Verschiebung und

Fig. 9 mit den Teilfiguren a) bis d) schematisch mögliche Ausbildungen einer erfindungsgemäßen Gelenkwelle mit Zentrierung.

Die in den Figuren dargestellten Gelenkwellen bestehen in ihrem grundsätzlichen Aufbau aus zwei kardanischen Gelenken 1,2, einem Verbindungselement 3 und Anschlußelementen 4, 5 mit Naben- (6) und/oder Flanschanschluß 7. Die kardanischen Gelenke 1, 2 weisen im nichtausgelenkten Zustand in einer Ebene liegende Gelenkbolzen 8 auf. Sie sind über das Verbindungselemente 3 hintereinander angeordnet.

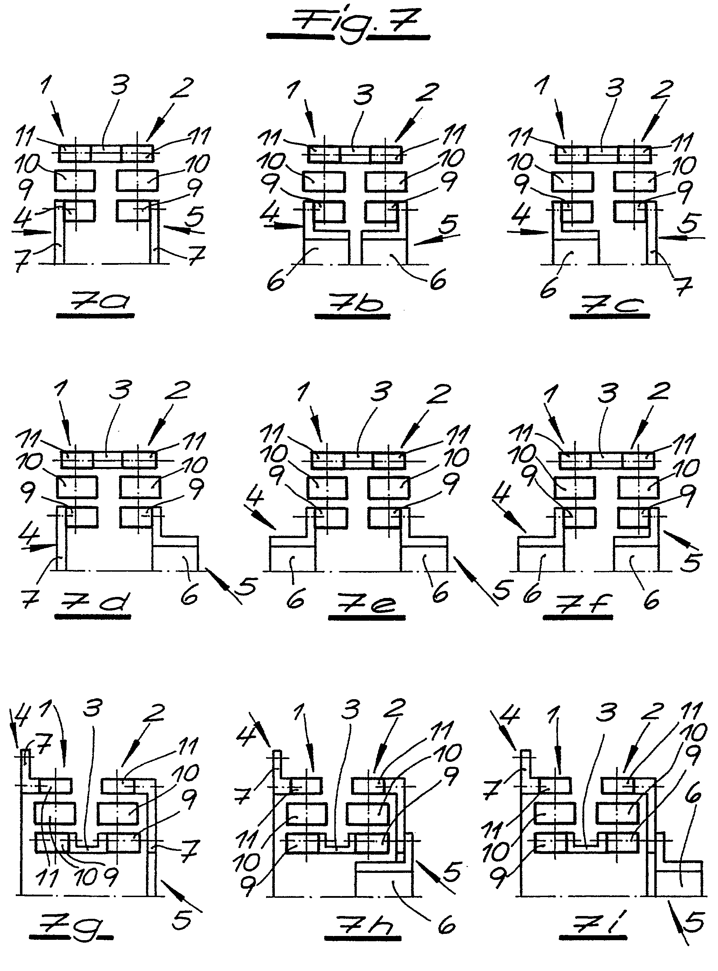

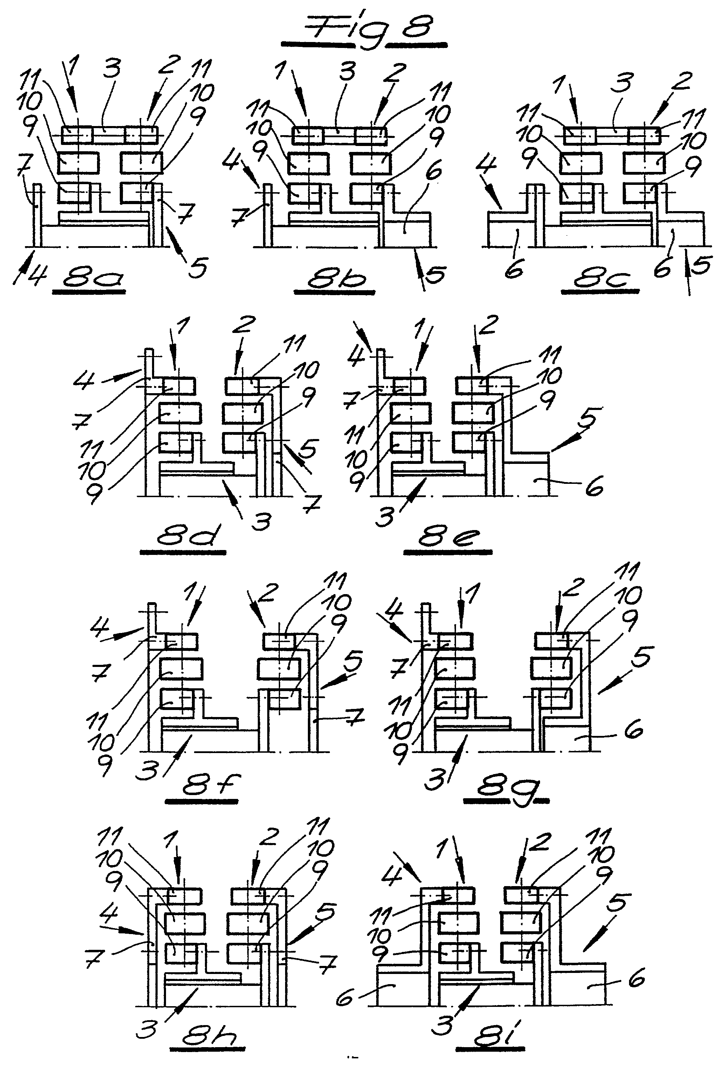

Die kardanischen Gelenke 1, 2 sind in besonderer Weise gestaltet, wozu auf die Fig. 3 verwiesen wird. Sie entsprechen einer kardanischen Aufhängung. Sie sind dazu aus jeweils einem Innenring 9, einem Zwischenring 10 und einem Außenring 11 aufgebaut, und zwar mit diametral gegenüberliegenden Gelenkbolzen 8 zwischen Innenring 9 und Zwischenring 10 einerseits sowie, um 90° versetzt, zwischen Zwischenring 10 und Außenring 11 andererseits.

Das Verbindungselement 3 verbindet entweder die beiden Außenringe 11 oder die beiden Innenringe 9. Die Anschlußelemente 4, 5 sind jeweils an die von dem Verbindungselement 3 nicht belegten, freien Ringe, d. h. an die freien Außenringe 11 bzw. an die freien Innenringe 9 angeschlossen.

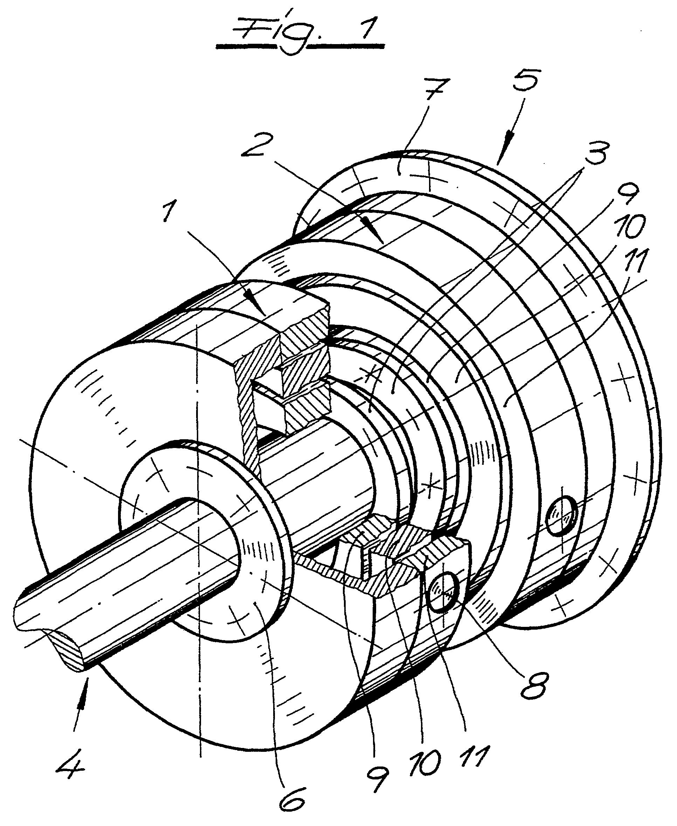

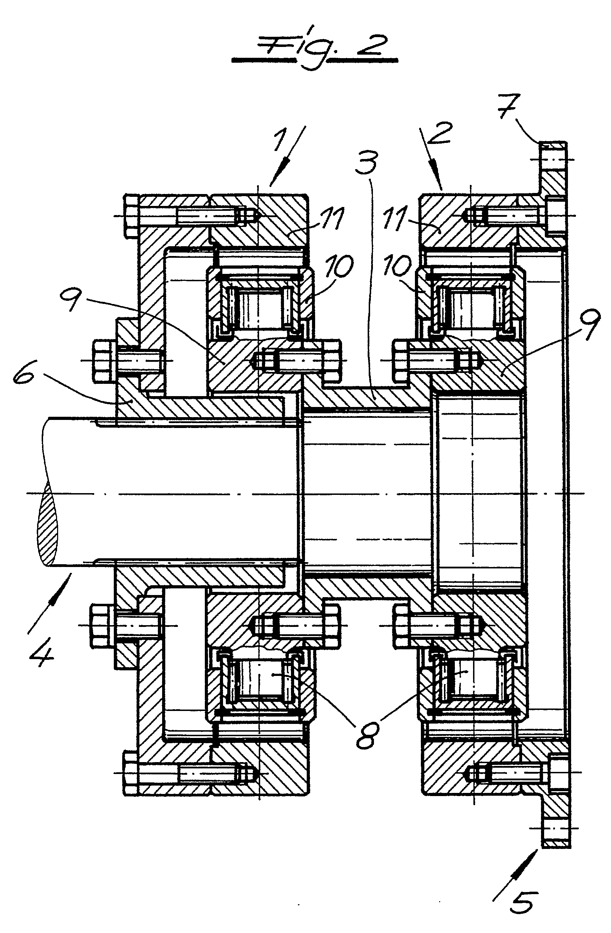

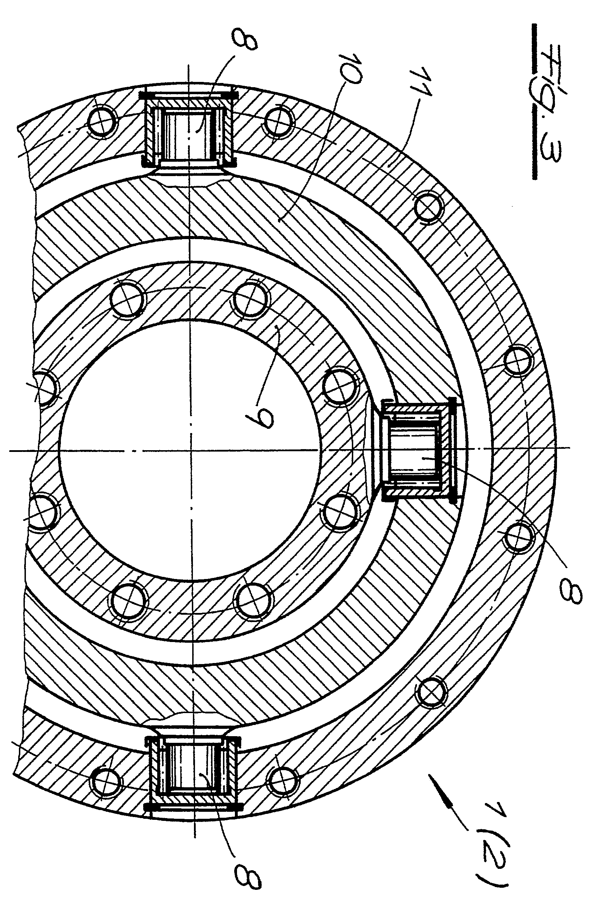

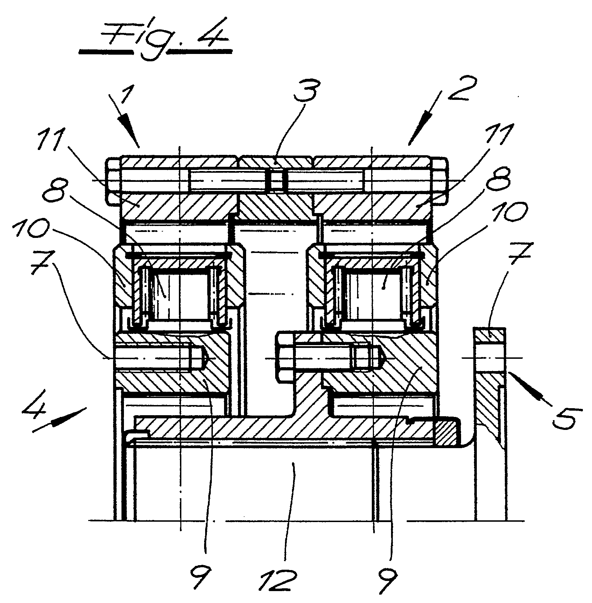

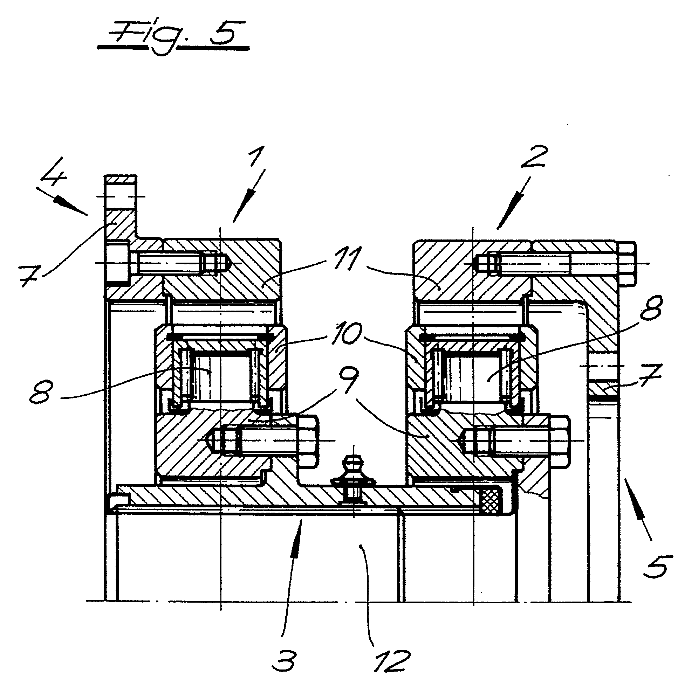

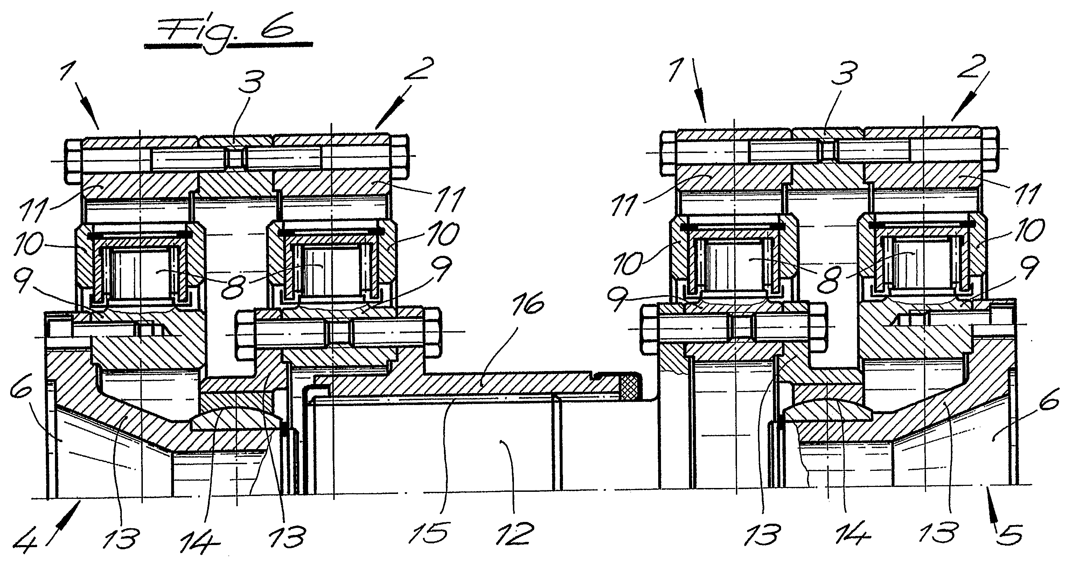

Bei der Ausführungsform nach den Figuren 1 und 2 ist das Gelenk mit einer axialen Verschiebbarkeit nicht ausgerüstet. Das Verbindungselement 3 verbindet die beiden Innenringe 9. Das Anschlußelement 5 besitzt einen Flanschanschluß 7 und das Anschlußelement 4 einen Nabenanschluß 6.

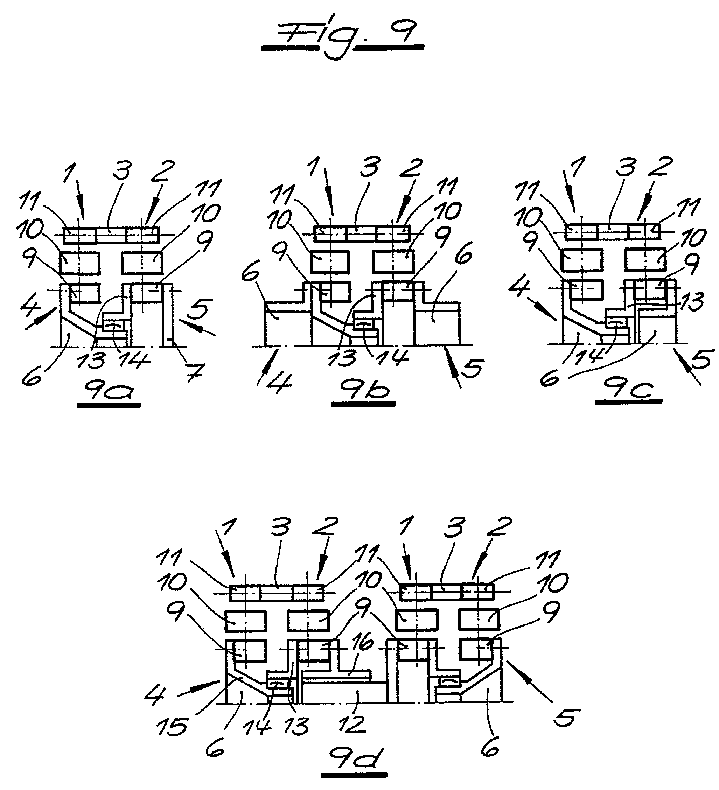

Bei der Ausführungsform nach den Figuren 4 und 5 ist die Gelenkwelle mit einer axiale Verschiebbarkeit ausgerüstet. In der Ausführungsform nach Fig. 4 verbindet das Verbindungselement 3 die Außenringe 11. Eines der Anschlußelemente 5 weist eine Welle 12 auf, die in einen der Innenringe 9 drehfest, aber axial verschiebbar, eingeführt ist. Es kann sich dabei um eine verschiebbare Verkeilung handeln. In der Ausführungsform nach Fig. 5 verbindet das Verbindungselement 3 die Innenringe 9. Das Verbindungselement 3 weist im übrigen eine Welle 12 auf, die in einem der Innenringe 9 drehfest, aber axial verschiebbar, eingeführt ist.

Bei der Ausführungsform nach Fig. 6 sind ebenfalls die Außenringe 11 durch das Verbindungselement 3 vereinigt. In die Innenringe 9 sind Zentrierelemente 13 eingesetzt, die mit jeweils einem der Innenringe 9 verbunden sind und unter Zwischenschaltung einer nur eine Winkelbewegung zulassenden Zentriergelenkausbildung 14 einander überfassen. Dabei ist der eine der Innenringe 9 mit einer Einrichtung 15 zum Anschluß einer Welle bzw. einer Wellenhülse 16 zur drehfesten, aber axial verschiebbaren Aufnahme einer Wellenhülse bzw. einer Welle 12 versehen, und zwei Aggregate dieses Aufbaus sind zu der in Fig. 6 dargestellten, axial verschiebbaren, homokinetischen Gelenkwelle zusammengefaßt.

In den Figuren 7 bis 9 sind, soweit erforderlich, die oben definierten Bezugzeichen eingetragen worden. Sie sind damit ohne weiteres verständlich und erläutern gleichsam verschiedene "Schaltungsmöglichkeiten" erfindungsgemäßer Gelenkwellen.

## Patentansprüche

1. Gelenkwelle mit zwei kardanischen Gelenken (1, 2), Verbindungselement (3) und Anschlußelementen (4, 5) mit Naben- und/oder Flanschanschluß, wobei die kardansichen Gelenke (1, 2) im nichtausgelenkten Zustand in einer Ebene liegende Gelenkbolzen (8) aufweisen und über das Verbindungselement (3) hintereinander angeordnet sind, wobei ferner die kardanischen Gelenke (1, 2) aus jeweils einem Innenteil, einem Zwischenring (10) und einem Außenring (11) aufgebaut sind, und zwar mit diametral gegenüberliegenden Gelenkbolzen (8) zwischen Innenteil und Zwischenring (10) einerseits, sowie um 90° versetzt, zwischen Zwischenraum (10) und Außenring (11) andererseits, dadurch gekennzeichnet, daß die Innenteile jedes Gelenks (1, 2) als separate Innenringe (9) ausgebildet sind, das Verbindungselement (3) die beiden Innenringe (9) verbindet, und daß die Anschlußelemente (4, 5) an die von dem Verbindungselement (3) freien Außenringe (11) angeschlossen sind.

2. Gelenkwelle nach Anspruch 1, dadurch gekennzeichnet, daß das Verbindungselement (3) eine Welle (12) aufweist, die in einen der Innenringe (9) drehfest, aber axial verschiebbar, eingeführt ist.

3. Gelenkwelle mit zwei kardanischen Gelenken (1, 2), Verbindungselement (3) und Anschlußelementen (4, 5) mit Naben- und/oder Flanschanschluß, wobei die kardanischen Gelenke (1, 2) im nichtausgelenkten Zustand in einer Ebene liegende Gelenkbolzen (8) aufweisen und über das Verbindungselement (3) hintereinander angeordnet sind, wobei ferner die kardanischen Gelenke (1, 2) aus jeweils einem Innenteil, einem Zwischenring (10) und einem Außenring (11) aufgebaut sind, und zwar mit diametral gegenüberliegenden Gelenkbolzen (8) zwischen Innenteil und Zwischenring (10) einerseits sowie, um 90° versetzt, zwischen Zwischenring (10) und Außenring (11) andererseits, sowie das Verbindungselement (3) die beiden Außenringe (11) verbindet und die Anschlußelemente (4, 5) an die von dem Verbindungselement (3) freien, über eine Zentriergelenkausbildung (14) miteinander gekuppelten Innenteile angeschlossen sind, dadurch gekennzeichnet, daß die Innenteile jedes Gelenks (1, 2) als separate Innenringe (9) ausgebildet und über eine nur Winkelbewegung zulassende Zentriergelenkausbildung (14) gekuppelt sind und, daß einer der Innenringe (9) eine Einrichtung zum Anschluß einer Welle (12) oder einer Wellenhülse (16) zur drehfesten, aber axial verschiebbaren Aufnahme der Wellenhülse (16) bzw. der Welle (12) aufweist.

## Claims

1. A universal joint with two Cardan joints (1, 2), a junction piece (3) and connecting units (4, 5) with hub and/or flange connections, in which the Cardan joints (1, 2) possess joint pins (8) that in the undeflected condition lie in a plane and are located behind one another via the junction piece (3), in which moreover the Cardan joints (1, 2) are each constructed of an inner component, an intermediate ring (10) and an outer ring (11), this being with diametrically opposite joint pins (8) between the inner component and the intermediate ring (10) on one hand and, displaced by 90°, between the intermediate ring (10) and the outer ring (11) on the other hand, characterized in that the inner components of each joint (1, 2) are constructed as separate inner rings (9), the junction piece (3) connects the two inner rings (9) together, and that the connecting units (4, 5) are connected to the outer rings (11) that are free from the junction piece (3).

2. A universal joint according to Claim 1, characterized in that the junction piece (3) possesses a shaft (12) that is inserted into one of the inner rings (9) in a non-rotatable but axially movable manner.

3. A universal joint with two Cardan joints (1, 2), a junction piece (3) and connecting units (4, 5) with hub and/or flange connections, in which the Cardan joints (1, 2) possess joint pins (8) that in the undeflected condition lie in a plane and are located behind one another via the junction piece (3), in which moreover the Cardan joints (1, 2) are each constructed of an inner component, an intermediate ring (10) and an outer ring (11), this being with diametrically opposite joint pins (8) between the inner component and the intermediate ring (10) on one hand and, displaced by 90°, between the intermediate ring (10) and the outer ring (11) on the other hand, and the junction piece (3) connects the two outer rings (11) together and the connecting units (4, 5) are connected to the inner components that are free from the junction piece (3) and are coupled together via a centralizing joint formation (14) characterized in that the inner components of each joint (1, 2) are constructed as separate inner rings (9) and are coupled together via a centralizing joint formation (14) that only permits of angular movements, and that one of the inner rings (9) possesses an appliance for the connection of a shaft (12) or a shaft casing (16) for the non-rotatable but axially movable reception of the shaft casing (16) or shaft (12).

## Revendications

1. Arbre de transmission comportant deux joints de cardan (1, 2), un élément de liaison (3) et des éléments de raccordement (4, 5) comportant un raccordement de moyeu et/ou de bride, et dans lequel, lorsque les joints de cardan (1, 2) ne sont pas en position déviée, ils possèdent des axes d'articulation (8) situés dans un plan et sont disposés l'un derrière l'autre moyennant l'interposition de l'élément de liaison (3), et dans lequel en outre les joints de cardan (1, 2) sont constitués chacun par une partie intérieure, une bague intercalaire (10) et une bague extérieure (11), des axes d'articulation (8) diamétralement opposés étant disposés entre la partie intérieure et la bague intercalaire (10) d'une part ainsi que, en étant décalés de 90°, entre la bague intercalaire (10) et la bague extérieure (11) d'autre part, caractérisé en ce que les parties intérieures de chaque joint (1, 2) sont réalisées sous la forme de bagues intérieures séparées (9), que l'élément de liaison (3) relie les deux bagues intérieures (9) et que les éléments de raccordement (4, 5) sont raccordés aux bagues extérieures (11) non reliées à l'élément de liaison (3).

2. Arbre de transmission selon la revendication 1, caractérisé en ce que l'élément de liaison (3) possède un arbre (12), qui est introduit avec blocage en rotation, mais en étant déplaçable axialement, dans l'une des bagues intérieures (9).

3. Arbre de transmission comportant deux joints de cardan (1, 2), un élément de liaison (3) et des éléments de raccordement (4, 5) comportant un raccordement de moyeu et/ou de bride, et dans lequel, lorsque les joints de cardan (1, 2) ne sont pas en position déviée, ils possèdent des axes d'articulation (8) situés dans un plan et sont disposés l'un derrière l'autre moyennant l'interposition de l'élément de liaison (3), et dans lequel en outre les joints de cardan (1, 2) sont constitués chacun par une partie intérieure, une bague intercalaire (10) et une bague extérieure (11), des axes d'articulation (8) diamétralement opposés étant disposés entre la partie intérieure et la bague intercalaire (10) d'une part ainsi que, en étant décalés de 90°, entre la bague intercalaire (10) et la bague extérieure (11) d'autre part, et dans lequel l'élément de liaison (3) relie les deux bagues extérieures (11), et les éléments de raccordement (4, 5) sont raccordés aux parties intérieures séparées de l'élément de liaison (3) et accouplées entre elles par l'intermédiaire d'un système d'articulation de centrage (14), caractérisé en ce que les parties intérieures de chaque joint (1, 2) sont réalisées sous la forme de bagues intérieures séparées (9) et sont accouplées par l'intermédiaire d'un système d'articulation de centrage (14), qui n'autorise que des déplacements angulaires, et que l'une des bagues intérieures (9) comporte un dispositif servant à raccorder un arbre (12) ou un manchon d'arbre (16) de manière à loger avec blocage en rotation, mais avec possibilité de déplacement axial, le manchon d'arbre (16) ou l'arbre (12).

*Fig. 1*

_Fig. 2_

*Fig. 3*

Fig. 4

Fig. 5

Fig. 6

EP 0 245 645 B1

# Fig. 7

Fig 8

*Fig. 9*